# EUROPEAN PATENT SPECIFICATION

(11) **EP 1 628 191 B1**
(45) Date of publication and mention of the grant of the patent: **05.10.2011**
(21) Application number: 05107574.5
(22) Date of filing: 17.08.2005
(51) Int. Cl.: G06F 1/16

(54) **Portable Computer**
Tragbarer Rechner.
Ordinateur portable.

(30) Priority: 17.08.2004 KR 2004064850
(43) Date of publication of application: 22.02.2006
(73) Proprietor: Samsung Electronics Co., Ltd, Suwon-si, Gyeonggi-do 442-742 (KR)
(72) Inventor: Lee, Seung-woon, Gyeonggi-do (KR)
(74) Representative: Walaski, Jan Filip

(56) References cited:
- EP-A- 0 454 120
- EP-A- 0 626 632
- EP-A- 1 418 487
- WO-A-03/060349
- US-A- 6 005 767
- US-A1- 2004 085 720
- US-A1- 2004 114 315
- US-B1- 6 317 315

## Description

The present invention relates generally to a portable computer. More particularly, embodiments of the present invention relate to a portable computer capable of tablet functionality.

The term portable computer is used to refer to any computer such as a laptop computer, a notebook computer, a palmtop computer, etc., which can be carried by a user.

A portable computer disclosed in U.S. patent No. 6,005,767 comprises a main body having a plurality of hardware components and a display body receiving a video signal and displaying a picture based on the video signal. The display body pivots about first and second hinges enabling it to be folded against and unfolded away from the main body. The main body internally comprises a motherboard having a central processing unit, a graphics card, etc., and externally comprises input units such as a keyboard, a mouse, etc.

With this configuration, the display body can be unfolded from the main body and rotated 90° or 180° with respect to the main body, where the display body is considered to be at an angle of 0° when folded against the main body.

Displays have been developed that have touch-sensitive screens for receiving user inputs. Computers capable of being operated in this manner are referred to herein as tablet computers, having tablet functionality. However, portable computers having display bodies such as that described in U.S. patent No. 6,005,767 can require a user to repeatedly rotate the display body between 0° and 180° positions, depending on the manner in which they wish to use the computer.

The present invention aims to address the above problems.

US 2004/0114315 A1 discloses a convertible mobile computing device with a display screen and cover, supported at three points for stable movement between a closed position, a laptop PC operational position and a tablet PC operational position.

The present invention aims to address the above problems.

According to the present invention, there is provided a portable computer according to claim 1.

According to one aspect of the invention, there is provided a portable computer comprising a first portion having a display, a second portion having data entry means, and a connecting portion connecting the first and second portions, wherein the connecting portion is arranged to allow the first portion to be positioned such that it is substantially folded against the second portion and the display faces away from the second portion.

The connecting portion can comprise first and second hinges each disposed at an opposite end of the connecting portion, the first hinge coupling the second portion to the connecting portion and the second hinge coupling the first portion to the connecting portion. The axes of rotation of the first and second hinges can be parallel. In the folded position, the connecting portion can be substantially sandwiched between the first and second portions.

According to another aspect of the invention, there is also provided a portable computer including a tablet body to accommodate a plurality of hardware components and that is capable of a tablet operation; an input unit body to input data into the tablet body; and one link having a first end rotatably coupled to a rear of the tablet body and a second end rotatably coupled to a back of the input unit body, wherein the tablet body alternates between a tablet operation position in which the tablet body is folded on the input unit body while the link is interposed between the rear of the tablet body and an upper surface of the input unit body, and an exposed position in which the tablet body coupled with the link is spaced from the input unit body and the upper surface of the input unit body is externally exposed.

According to another aspect of the present invention, the tablet body may be detachably coupled to the input unit body.

According to another aspect of the present invention, the portable computer may further comprise a coupling unit provided in a coupling portion between the link and the tablet main body and detachably coupling the tablet body to the input unit body, wherein the coupling unit comprises a projection provided in one of the tablet body and the link, and a rotation plate rotatably provided in the other and formed with a rotation projection to be locked to the projection.

According to another aspect of the present invention, the portable computer may further comprise a latch provided to slide in the input unit body, interlocking with the rotation plate, and rotating the rotation plate to cause the rotation projection to be locked to and released from the projection.

According to another aspect of the present invention, the rotation plate may be formed with a rotation guide projection, the link is formed with a projection guide elongated hole in which the rotation guide projection is inserted, and the latch is formed with a rotation guide elongated hole in which the rotation guide projection inserted in the projection guide elongated hole in the tablet operation position is guided.

According to another aspect of the present invention, the portable computer may further comprise a lever rotatably provided in the input unit body, connected to the latch, and allowing the latch to slide in the input unit body.

According to another aspect of the present invention, the latch may be formed with a lever projection, and the lever comprises a grip exposed to the outside of the input unit body, and a lever guide extending from the grip and stopped by the lever projection in the input unit body.

According to another aspect of the present invention, the portable computer may further comprise a guide provided in the input unit body and guiding the latch to slide; and a stopper assembly connecting the guide with the latch.

According to another aspect of the present invention, the portable computer may further comprise a first spring including a first end coupled to the input unit body and a second end coupled to the latch, and exerting an elastic force to the latch. According to another aspect of the present invention, the portable computer may further comprise a locking unit provided between the link and the input unit body and allowing the link to be locked to and released from the input unit body.

According to another aspect of the present invention, the locking unit may comprise a locking hole provided in one of the link and the input unit body, and a locker provided to slide in the other and including a hook to be locked to the locking hole.

According to another aspect of the present invention, the portable computer may further comprise a knob provided to slide in the input unit body, connected to the locker, and making the locker to slide.

According to another aspect of the present invention, the portable computer may further comprise a first hinge rotatably connecting the link and the input unit body; and a second hinge rotatably connecting the link and the tablet body at a position spaced from the first hinge.

According to another aspect of the present invention, the portable computer may further comprise a supporting unit rotatably coupled to the link by the second hinge, wherein the supporting unit is formed with the locking hole to which the hook is locked in the tablet operation position.

According to another aspect of the present invention, the first hinge may comprise a pair of first hinge shafts; a first link shaft supporter provided in the link and supporting a first side of each first hinge shaft; and a first main shaft supporter provided in the input unit body and supporting a second side of each first hinge shaft, each first hinge shaft comprising a first main hinge shaft and a first link hinge shaft, which are rotatably coupled to each other.

According to another aspect of the present invention, the second hinge may comprise a pair of second hinge shafts; a second link shaft supporter provided in the link and supporting a first side of each second hinge shaft; and a second main shaft supporter provided in the supporting unit and supporting a second side of each second hinge shaft, each second hinge shaft comprising a second main hinge shaft and a second link hinge shaft, which are rotatably coupled to each other.

According to another aspect of the present invention, the input unit body may comprise a link accommodating portion to accommodate the link at the tablet operation position.

According to another aspect of the present invention, the link may comprise a connector assembly electrically connecting the tablet body with the input unit body.

According to another aspect of the present invention, the portable computer may further comprise a second spring including a first end coupled to the input unit body and a second end coupled to the locker, and exerting an elastic force to the locker.

According to another aspect of the present invention, the portable computer may further comprise a locking unit provided between the link and the input unit body and allowing the link to be locked to and released from the input unit body.

According to another aspect of the present invention, the locking unit may comprise a locking hole provided in one of the link and the input unit body, and a locker provided to slide in the other and having a hook to be locked to the locking hole.

To aid understanding of the invention, embodiments thereof will now be described, purely by way of example, with reference to the accompanying drawings, in which:
Figure 1 is a perspective view of a portable computer according to the present invention in a tablet operating position;
Figure 2 is a perspective view of the portable computer of Figure 1 in a detached position;
Figure 3 is an exploded perspective view of a portable computer according to the present invention;
Figure 4 is an enlarged view of the latch, lever, guide, stopper assembly, locking element, bolts, and the lock button of Figure 3;
Figure 5 is an exploded perspective view of the hinge assembly of Figure 3;
Figure 6 is a rear perspective view of a portable computer according to the present invention, in which the tablet body is detached from the hinge assembly;
Figure 7 is a schematic rear view of a portable computer according to the present invention illustrating a rotation plate coupled to a rear of the tablet body;
Figures 8 and 9 illustrate the operation of a locking unit and a coupling unit according to the present invention; and
Figures 10 to 13 illustrate rotated states of a tablet body according to the present invention.

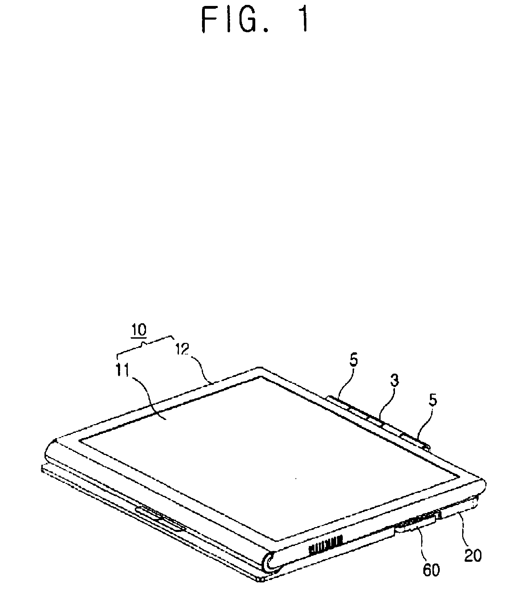

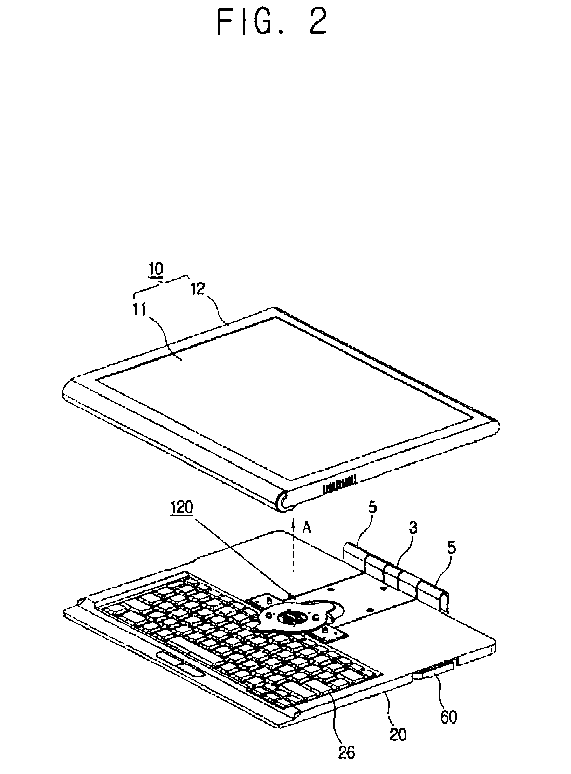

As shown in Figures 1 and 2, a portable computer in an embodiment of the present invention comprises a tablet body 10 including a plurality of hardware components and having tablet computer functionality; an input unit body 20 detachably connected to the tablet body 10 and, in particular, arranged so as to allow the tablet body 10 to be detached therefrom in the direction of arrow "A" illustrated in Figure 2; and a hinge assembly 120 provided between the tablet body 10 and the input unit body 20.

The tablet body 10 comprises an external casing 12; a plurality of hardware components (not shown) accommodated in the external casing 12, the hardware components including a main board, a central processing unit (CPU), a random access memory (RAM), etc.; and a display part 11 supported by the external casing 12 and used to display images.

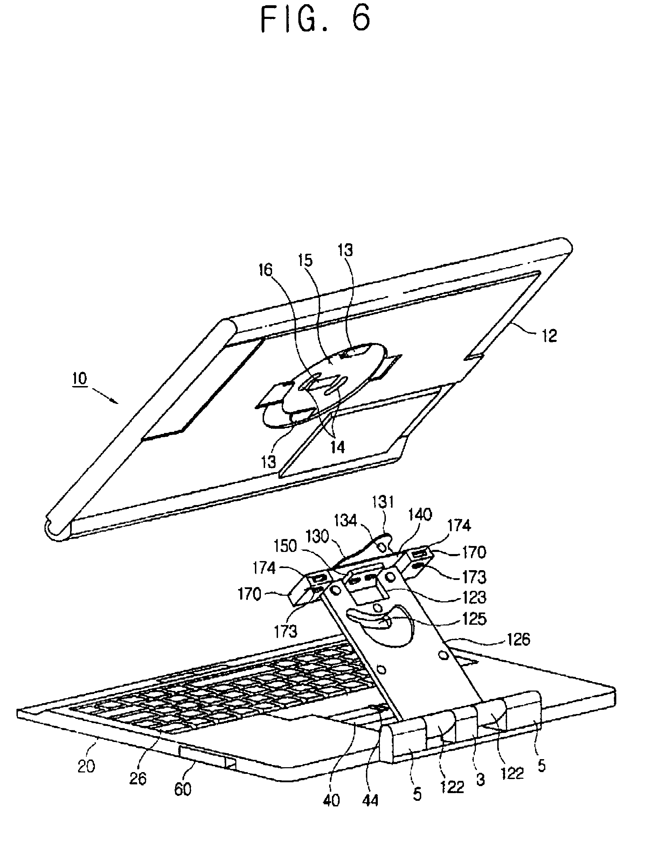

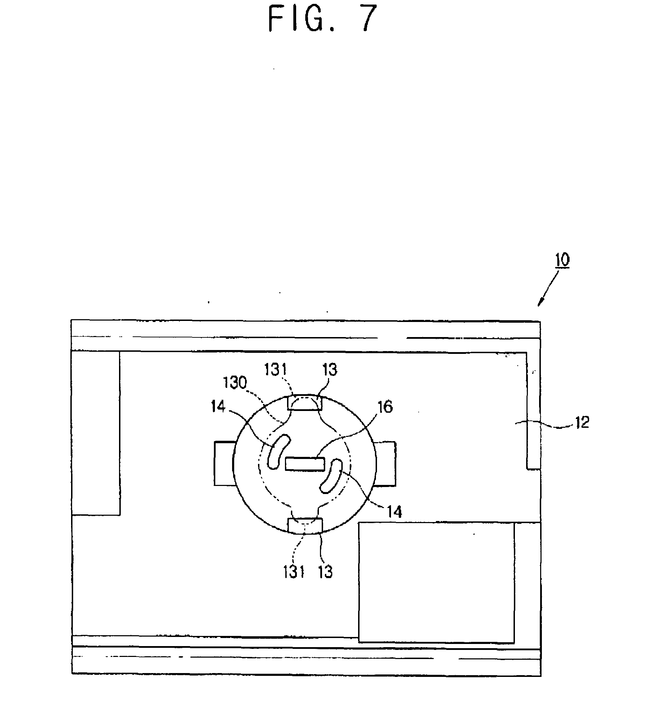

As shown in Figures 6 and 7, in the rear of the external casing 12, on the opposite side of the tablet body 10 to the display part 11, is provided a recessed portion 15, recessed from the surface of the external casing 12; a pair of locking tabs 13, also referred to as projections, raised from and substantially parallel to the main surface of the recessed portion 15; a pair of guide grooves 14 recessed from the main surface of the recessed portion 15; and a connecting portion 16 provided between the pair of guide grooves 14.

The projections 13 are arranged so as to allow first and second rotation plate projections 131 formed on a rotation plate 130 to be locked thereto and released therefrom. Thus, as shown in Figure 7, while the rotation plate projections 131 are locked in place behind the projections 13, the tablet body 10 is coupled to the input unit body 20.

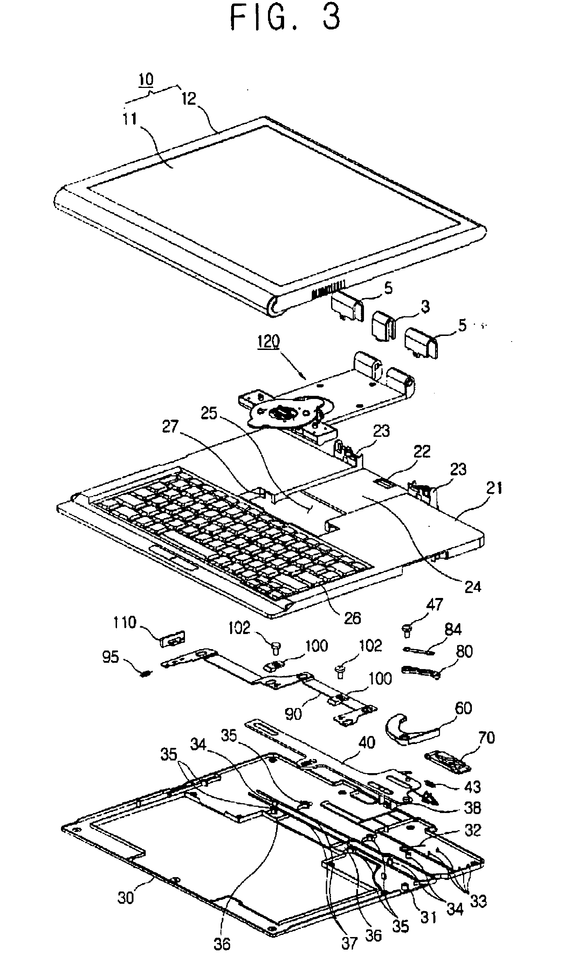

Referring to Figure 3, the input unit body 20 comprises an upper casing 21 and a lower casing 30 coupled to a lower portion or underside of the upper casing 21.

The upper casing 21 is provided with a keyboard 26 for receiving user inputs; a link accommodating portion 24 recessed from an upper surface of the upper casing; a through hole 25 penetrating the upper surface and located at a front end of the link accommodating portion 24, the through hole 25 having first and second bolt passing portions 27, also referred to as hook inserting portions, through which first and second bolts 100, also referred to as hooks, (to be described later) can move. The upper casing 21 is coupled to first and second hinge shaft caps 5 provided at a rear end of the link accommodating portion 24; and a cable cap 3 provided between the pair of hinge shaft caps 5.

The upper casing 21 comprises first and second coupling portions 23 to which the first and second hinge shaft caps 5 are respectively coupled; and a fitting groove 22 into which the cable cap 3 is fitted. Each hinge shaft cap 5 and respective coupling portion 23 is coupled so as to interpose a respective one of a pair of first main hinge shafts 164a therebetween, so that the first main hinge shaft 164a is supported by the respective hinge shaft cap 5 and coupling portion 23. The cable cap 3 fitted into the fitting groove 22 is supported by a cable cap supporter 38 formed in the lower casing 30.

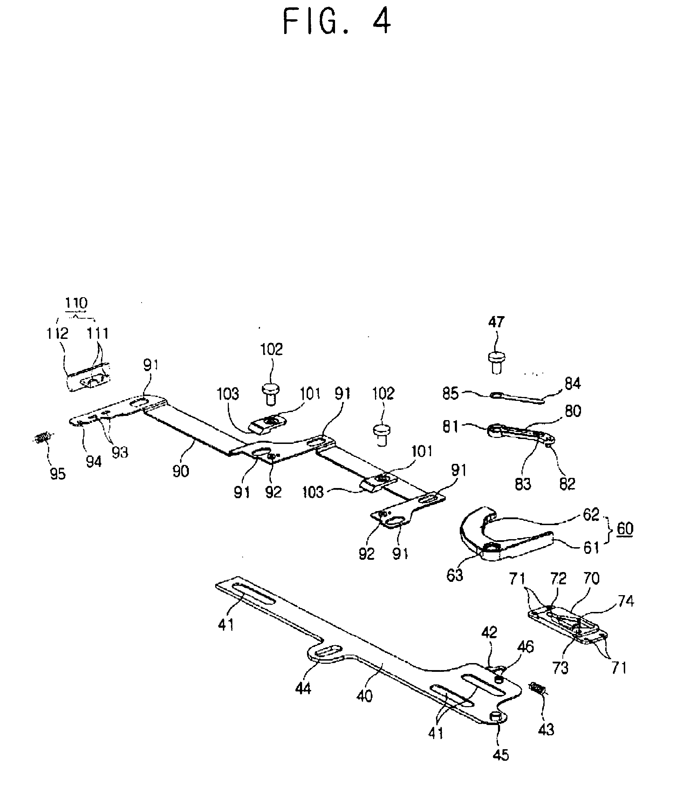

As shown in Figures 3 and 4, between the upper casing 21 and the lower casing 30 are provided components of a coupling unit 13, 40, 60, 131 detachably coupling the tablet body 10 with the input unit body 20; and a locking unit 90, 110, 174 allowing a link 126 (Figure 6) of the hinge assembly 120 to be locked to and released from the input unit body 20.

The coupling unit 13, 40, 60, 131 comprises the fastening tabs or projections 13 formed in the tablet body 10; the first and second rotation plate projections 131 formed in the rotation plate 130 and arranged to lock to the projections 13; and a latch 40 and lever 60 provided in the lower casing 30.

The latch 40, illustrated in Figure 3, is arranged to slide in a straight line and, in doing so, to rotate the rotation plate 130. The lever 60 is engaged with the latch 40 and is used to slide the latch 40. The lever 60 is coupled to a fourth spring 32 biased so as to elastically return the lever 60 to its original position following movement of the lever 60. A guide 70 is provided to control the angular movement of the rotation plate 130 and the movement of the latch 40. Additionally, between the latch 40 and the guide 70 is provided a stopper assembly 80, 84.

The latch 40 is placed on a pair of latch guide ribs 37 formed in the lower casing 30 and is connected to the lower casing 30 by a first spring 43 biased so as to exert an elastic force in an opposite direction to the sliding direction of the latch 40 when moved by the lever 60.

As shown in Figure 4, the latch 40 comprises first, second and third elongated guiding holes 41 penetratingly formed thereon; a spring holder 42 holding the first spring 43; a lug 45, also referred to as a lever projection, coupled to the lever 60; a stopper coupling portion 46 to which the stopper assembly 80, 84 is coupled; and a rotation guiding elongated hole 44 coupled to the rotation plate 130.

Into each of the first, second and third elongated guiding holes 41 is inserted one of first, second and third latch bosses 34 protruding from the lower casing 30 (refer to Figure 3). Further, to the spring holder 42 is coupled a second end of the first spring 43 having a first end fastened to the lower casing 30.

A second screw 47 fastens the stopper assembly 80, 84 to the stopper coupling portion 46 of the latch 40. In particular, the stopper 80 is provided with a stopper through hole 81 through which the second screw 47 is passed in order to couple the stopper 80 to the stopper coupling portion 46 of the latch 40.

The stopper assembly 80, 84, interconnects the guide 70 and the latch 40, thereby enabling the guide 70 to control the movement of the latch 40. The stopper assembly 80, 84 comprises a stopper 80 connecting the latch 40 and the guide 70, and a third spring 84 coupled to the stopper 80.

As shown in Figure 4, the guide 70 has a plurality of guide boss holes 71, each hole 71 coupled to a respective guide boss 33 formed on the lower casing 30; and a recess having first, second and third sections 72, 73, 74 accommodating a stopper projection 82 of the stopper assembly 80, 84 so as to influence the sliding operation of the latch 40. In particular, the stopper projection 82 moves within the first, second and third sections 72, 73 and 74 of the guide 70 so as to determine the manner in which the latch 40 slides.

The third spring 84 is placed on the stopper 80 and elastically presses the stopper 80 downwards, pushing the stopper 80 onto the guide 70. The third spring 84 has a first end having a third spring hole 85 through which the second screw is passed so as to couple the third spring 84 to the stopper 80. A second end of the third spring 84 is placed onto a protrusion 83 of the stopper 80.

As shown in Figure 4, the lever 60 comprises a lever button 61, also referred to as a grip, that a user can use to push the lever 60; a lever arm 62, also referred to as a lever guide, extending from the lever button 61 and abutting the lug 45 of the latch 40; and a lever coupling hole 63 formed between the lever button 61 and the lever arm 62.

The lever button 61 is exposed to the outside of the lower casing 30, and the lever arm 62 is in association with the lug 45 of the latch 40 so as to interlock the lever 60 with the latch 40. A lever boss 31 formed on the lower casing 30 is received in the lever coupling hole 63, such that the lever 60 is rotatably supported by the lower casing 30.

The locking unit 90, 110, 174 comprises first and second bolt receiving holes 174 (see Figure 6) formed in respective first and second holders 170 (to be described later); a locking element 90 (see Figure 3) provided above the latch 40 and provided with first and second bolts 100 to be received in the bolt receiving holes 174 of the first and second holders 170; and a lock button 110, also referred to as a knob, to be pressed by a user so as to control the movement of the locking element 90.

The locking element 90 is spaced from and disposed above the latch 40 in the lower casing 30 and slides in a transverse or perpendicular direction to the sliding direction of the latch 40.

The locking element 90 has a first end connected to the lower casing 30 by a second spring 95 that is biased so as to exert an elastic force in an opposite direction to the sliding direction of the locking element 90 when moved by the lock button 110.

As shown in Figure 4, the locking element 90 comprises a plurality of elongated locking element guiding holes 91, each receiving one of a plurality of locking element bosses 35 provided in the lower casing 30; the first and second bolts 100 to be received in the first and second bolt receiving holes 174 so as to lock the hinge assembly 120 to the lower casing 30; first and second lock button coupling holes 93 for coupling the locking element 90 to the lock button 110; and a second spring holder 94 to which a second end of the second spring 95 is connected, the second spring 95 having a first end coupled to the lower casing 30.

Referring to Figures 3 and 4, each of the first and second bolts 100 comprises a third screw through hole 101 and is coupled to the locking element 90 by a respective one of a pair of third screws 102 which passes through the respective third screw through hole 101 and is, in turn, coupled to a bolt coupling hole 92 formed on the locking element 90. Each bolt 100 also comprise a hooking portion, also referred to as a catch 103, to be received by and released from one of the first and second bolt receiving holes 174 provided in the first and second holders 170 (to be described later) according to the movement and positioning of the locking element 90.

As shown in Figure 4, the lock button 110 comprises a button portion 112 accessible from the outside of the lower casing and first and second coupling projections 111, which project upwardly in a direction substantially parallel to the button portion 112 of the lock button 110 and which are formed on the end of a tongue projecting from the button portion 112 in a direction perpendicular to the main surface of the button portion 112. The first and second coupling projections 111 are received in the lock button coupling holes 93 of the locking element 90, thus enabling a user to push the button portion 112 of the lock button 110 so as to slide the locking element 90.

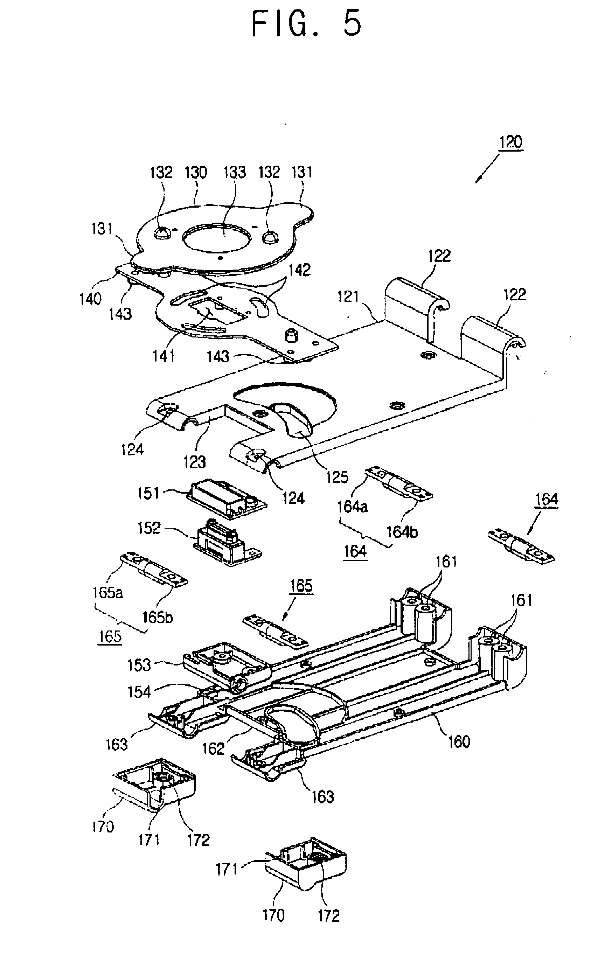

As shown in Figure 5, the hinge assembly 120 comprises the link 126 connecting the tablet body 10 with the input unit body 20; a first hinge 5, 23, 122, 161, 164 rotatably connecting the link 126 with the input unit body 20; a second hinge rotatably connecting the link 126 with the tablet body 10 at a position spaced from the first hinge; a supporting unit 140, 170 rotatably coupled to a coupling portion between the second hinge and the link 126; the rotation plate 130 rotatably coupled to the supporting unit 140, 170; and a connector assembly 150 coupled to the supporting unit 140, 170.

The link 126 has a first end connected to the input unit body 20 by the first hinge 5, 23, 122, 161, 164, and a second end connected to the supporting unit 140, 170 by the second hinge 121, 140, 163, 170.

As shown in Figure 5, the link 126 comprises an upper cover 121 and a lower cover 160. The upper cover 121 comprises first and second bent portions 122 upwardly extending from the surface of the upper cover 121 at a first end of the upper cover 121, a projection guide elongated hole 125 penetratingly formed in the upper cover 121, and an upper connector receiving portion 123 formed by a substantially square cut-out portion of the upper cover 121 at a second end of the upper cover 121 opposite to the first end, the upper connector receiving portion 123 supporting an upper portion of the connector assembly 150.

The upper cover 121 is provided with first and second upper cover coupling holes 124 for coupling the upper cover 121 to the lower cover 160, the first and second upper cover coupling holes being positioned at opposite respective sides of the upper connector receiving portion 123.

The lower cover 160 comprises a plurality of lower cover bosses 161 formed to correspond in shape to the first and second bent portions 122 of the upper cover 121, a lower connector receiving portion 162 having a shape corresponding to the upper connector receiving portion 123, and first and second extending portions 163, each disposed at an opposite respective side of the lower connector receiving portion 162.

The supporting unit 140, 170 comprises a supporting plate 140 interposed between the link 126 and the rotation plate 130, and the first and second holders 170 coupled to opposite end portions of the supporting plate 140.

The supporting plate 140 is formed with a connector receiving hole 141, also referred to as a connector insertion hole, penetrating the centre thereof, a plurality of rotation guide holes 142 adjacent to the connector receiving hole 141, and first and second holder coupling bosses 143, each positioned at an opposite end of the supporting plate 140 and coupled to a respective one of the first and second holders 170.

The first and second holders 170 are thus coupled to the opposite ends of the supporting plate 140, thereby allowing the link 126 to be interposed between the holders 170.

Each holder 170 comprises a first screw through hole 172 in which a respective one of a pair of first screws 173 is received, passing through the first screw hole 172 to connect to a respective one of the first and second holder coupling bosses 143, and an opening 171 supporting a second main hinge shaft 165a of a second hinge shaft 165 (to be described later).

The rotation plate 130 has an essentially circular outer periphery, is rotatably coupled to the supporting unit 140, 170, and comprises: a central hole 133; the first and second rotation plate projections 131 extending outwardly from the circular outer periphery; a pair of rotation plate protrusions 132 protruding from an upper surface of the rotation plate 130; and a plurality of lower rotation plate protrusions (not shown) protruding from a lower surface thereof. The lower rotation plate protrusions (not shown) are accommodated in the rotation guide holes 142 of the supporting plate 140.

The connector assembly 150 (see Figures 5 and 6) is received in the central hole 133 of the rotation plate 130 and in the connector receiving hole 141 of the supporting plate 140. Further, the connector assembly 150 comprises a docking connector 152 connected to the connection portion 16 formed in the rear of the tablet body 10, an upper connector cover 151 and a lower connector cover 153, the upper and lower covers 151, 153 supporting the docking connector 152.

The lower connector cover 153 is formed with first and second fitting lugs 154, each respectively protruding at an opposite end thereof and each fitting lug 154 being rotatably supported by a respective one of the first and second extending portions 163.

The first hinge 5, 23, 122, 161, 164 comprises a pair of first hinge shafts 164, each comprising a first main hinge shaft 164a and a first link hinge shaft 164b, which are rotatably coupled to each other; the first and second bent portions 122 of the upper cover 121 and the plurality of lower cover bosses 161, the bent portions 122 and lower cover bosses 161 being coupled to each other and functioning as a first link shaft supporter to support the pair of first link hinge shafts 164b; and the first hinge shaft cap 5 coupled to the first coupling portion 23 and the second hinge shaft cap 5 coupled to the second coupling portion 23 and functioning as a pair of first main hinge shaft supporters to support the pair of first main hinge shafts 164a.

In more detail, the leftmost of the pair of first hinge shafts 164 illustrated in Figure 5 will be described by way of example. The leftmost first hinge shaft comprises the first link hinge shaft 164b, which is supported between the leftmost of the first and second bent portions 122 and the leftmost pair of lower cover bosses 161, and the first main hinge shaft 164a, which is supported between the leftmost of the first and second hinge shaft caps 5 and the leftmost of the first and second coupling portions 23 (illustrated in Figure 3).

The second hinge comprises a pair of second hinge shafts 165, each comprising a second main hinge shaft 165a and a second link hinge shaft 165b, which are rotatably coupled to each other; first and second upper hinge shaft receiving portions provided at the second end of the upper cover 121, each provided on a respective opposite side of the upper connector receiving portion 123 and first and second lower hinge shaft receiving portions provided in the first and second extending portions 163 of the lower cover 160, the upper and lower hinge shaft receiving portions coupled to each other to as to function as a pair of second link shaft supporters to support the pair of second link hinge shafts 165b; and each opposite end portion of the supporting plate 140 coupled to a respective one of the first and second holders 170, the resulting couplings functioning as a pair of second main hinge shaft supporters to support the second main hinge shafts 165a.

In more detail, the leftmost of the pair of second hinge shafts 165, illustrated in Figure 5, will be described by way of example. The leftmost second hinge shaft comprises the second link hinge shaft 165b, which is supported between the leftmost of the first and second upper hinge shaft receiving portions provided at the second end of the upper cover 121 and the leftmost of the first and second lower hinge shaft receiving portions provided in the first and second extending portions 163 of the lower cover 160, and the second main hinge shaft 165a, which is supported between the leftmost of the end portions of the supporting plate 140 and the leftmost of the first and second holders 170. The second main hinge shaft 165a is received in the opening 171 of the leftmost of the first and second holders 170. Referring to Figure 6, the first end of the link 126 of the hinge assembly 120 is rotatably coupled to the input unit body 20, and the rotation plate projection 131 of the rotation plate 130 provided at the second end of the link 126 is released from the projections 13 of the tablet body 10, so that the tablet body 10 is separated from the second end of the link 126.

Still referring to Figure 6, the rotation plate 130 is coupled to the upper surface of the supporting plate 140, and the first and second holders 170 and the connector assembly 150 are coupled to the lower surface of the supporting plate 140.

The first rotation plate projection 131 of the rotation plate 130 is formed with a rotation plate projection guide 134 protruding downwards towards the input unit body 20. The rotation plate projection guide 134 can be received in the rotation guide elongated hole 44 of the latch 40 (see also Figure 4) provided in the input unit body 20. In order to do this, the rotation plate projection guide 134 passes through the projection guide elongated hole 125 formed in the link 126.

Further, each holder 170 is formed with a bolt receiving hole 174 into which the catch 103 of one of the bolts 100 is locked. The connector assembly 150 is connectable to the connecting portion 16 provided on the rear of the tablet body 10, thereby providing an electrical connection between the input unit body 20 and the tablet body 10.

Further, each of the rotation plate protrusions 132, illustrated in Figure 5, formed on the upper surface of the rotation plate 130 is accommodated in a respective guide groove 14 formed on the tablet body 10 and disposed at the opposite sides of the connecting portion 16, so that the rotation plate protrusions 132 can slide within the guide grooves 14, thus aligning the rotation plate 130 with the tablet body 10.

The portable computer according to an embodiment of the present invention can be changed from a tablet operating position (illustrated in Figure 1) in which the tablet body 10 is placed on the input unit body 20 with the display part 11 of the tablet body 10 facing upward away from the input unit body 20, to a detached position (illustrated in Figure 2) in which the tablet body 10 is detached from the input unit body 20 such that tablet operation of the portable computer can be performed while the tablet body 10 is carried by a user separately from the input unit body 20.

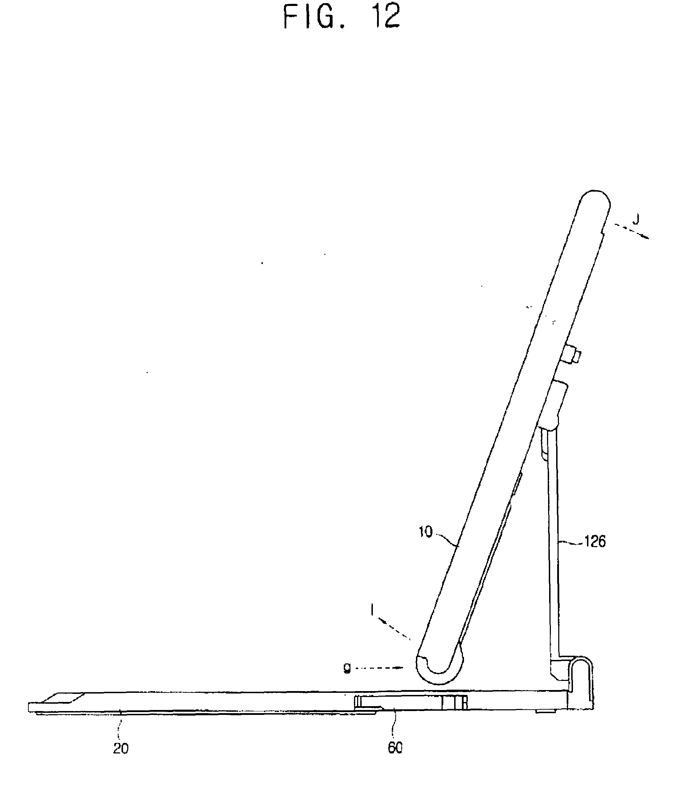

Further, the portable computer according to an embodiment of the present invention can be changed from the tablet operating position (refer to Figure 1) in which the tablet body 10 is against the input unit body 20 and the display part 11 faces upward, to a general operating position (illustrated in Figure 12) in which the tablet body 10 is raised above and tilted with respect to the input unit body 20, and the keyboard 26 of the input unit body 20 is uncovered and accessible by a user, thus allowing a user to input data using the keyboard 26.

Steps performed in changing the portable computer from the tablet operating position (refer to Figure 1) in which the tablet body 10 lies on the input unit body 20 and the display part 11 faces externally, away from the input unit body 20, to the general operating position (refer to Figure 12), will now be described.

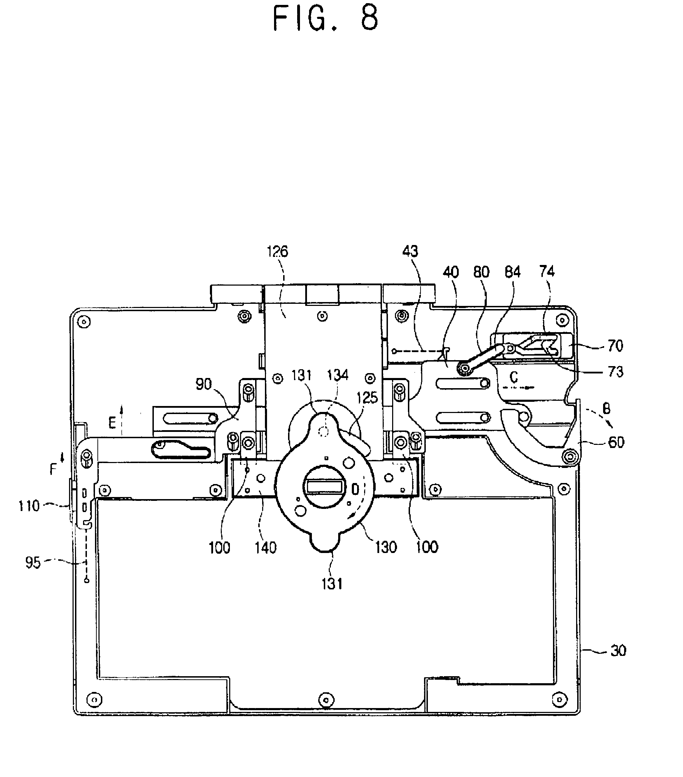

When the portable computer is arranged in the tablet operating position (see Figure 1), the rotation plate projections 131 of the rotation plate 130 are locked to the projections 13 of the tablet body 10, so that the tablet body 10 is locked to the input unit body 20 (see also Figure 7). At the same time, the catch 103 of each of the bolts 100 coupled to the locking element 90 is received in a respective one of the first and second bolt receiving holes 174 formed in the first and second holders 170 of the supporting unit 140, 170, so that the link 126 is locked to the input unit body 20 (see also Figure 8).

Further, in the arrangement shown in Figure 8, the rotation plate projection guide 134 of the rotation plate 130 is received in the rotation guide elongated hole 44 of the latch 40, in doing so passing through the projection guide elongated hole 125 of the link 126. The stopper projection 82 of the stopper 80 is accommodated in the first section 72 of the guide 70.

When the portable computer is arranged in this position, a user can release the tablet body 10 from the input unit body 20 by sliding or pushing the lock button 110 in the direction of arrow "F" illustrated in Figure 8, i.e. towards the rear of the portable computer. In this manner, the link 126 and the tablet body 10 can be spaced apart from the input unit body 20, rather than being locked against one another.

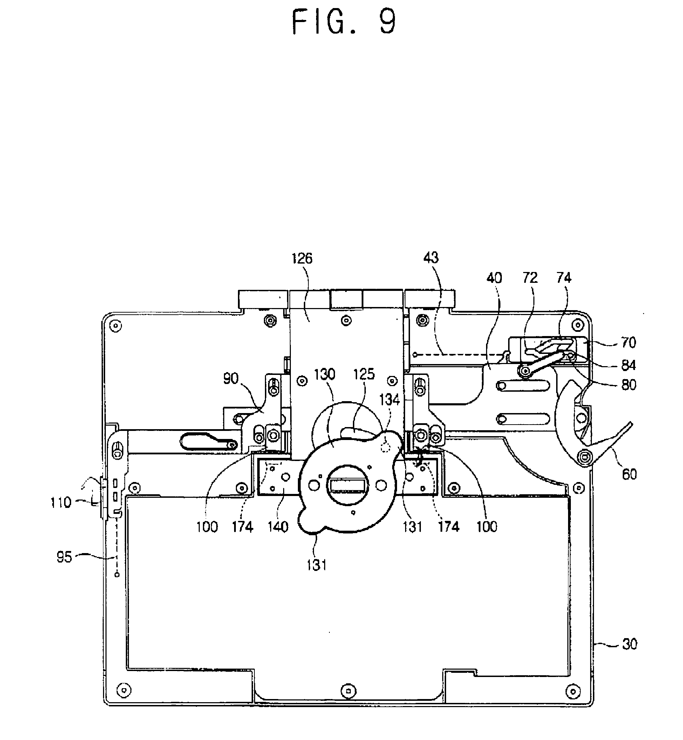

When the lock button 110 is pushed in the direction of arrow "F" illustrated in Figure 8, the locking element 90 slides in the direction of arrow "E", substantially parallel to direction of arrow "F", and at the same time each of the first and second bolts 100 coupled to the locking element 90 also slides in the direction of arrow "E". As shown in Figure 9, the catches 103 of the bolts 100 are released from the locking holes 174 of the holders 170 coupled to the supporting plate 140. That is, the link 126 coupled to the tablet body 10 is released from the input unit body 20.

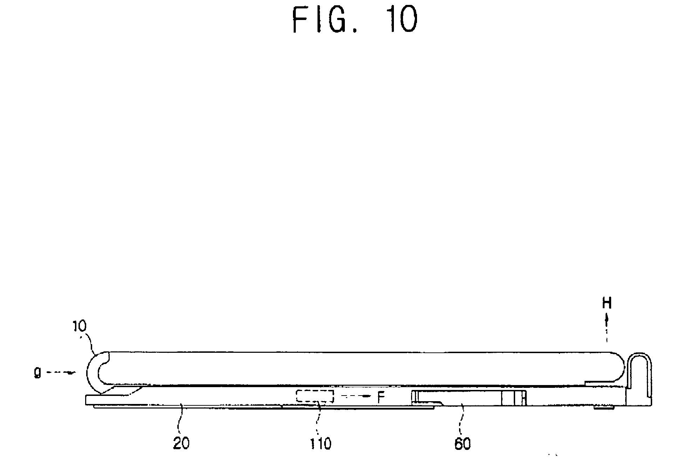

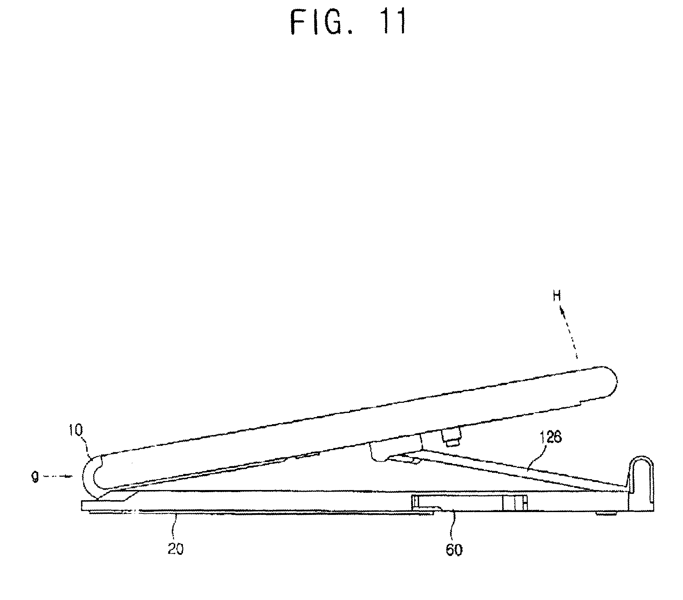

Thus, the tablet body 10 can be tilted as shown in Figures 10 and 11 when the end of the link 126 coupled to the tablet body 10 is released from the input unit body 20, so that the portable computer can be arranged in the general operating position of Figure 12, in which the keyboard 26 of the input unit body 20 is uncovered and accordingly accessible by a user.

As shown in Figures 10 and 11, when a front of the tablet body 10 is pushed in the direction of arrow "G" and a back of the tablet body 10 is lifted up in the direction of arrow "H", the tablet body 10 can be inclined with respect to the input unit body 20. At this time, the display part 11 of the tablet body 10 faces a user and the keyboard 26 of the input unit body 20 is exposed, so that a user can operate the keyboard 26 and look at the display part 11 of the tablet body 10.

Steps performed in changing the arrangement of the portable computer from the general operating position (refer to Figure 12) to the tablet operating position (refer to Figure 1) will now be described.

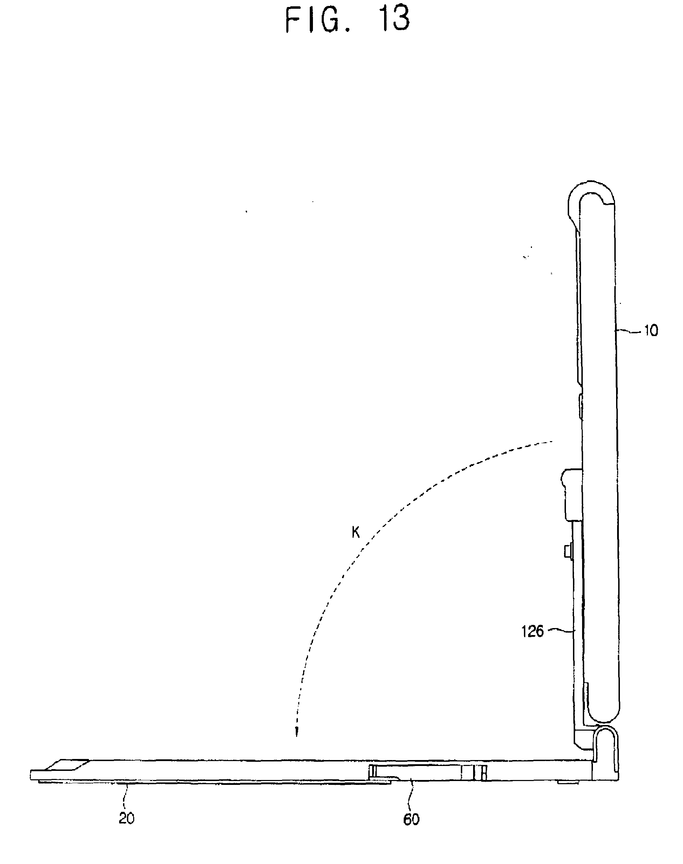

As shown in Figure 12, the front of the tablet body 10 is pulled in the direction of arrow "I" and the back of the tablet body 10 is pushed in the direction of arrow "J", such that the tablet body 10 pivots about the second hinge 121, 140, 163, 165, 170, and is rotated until the display part 11 of the tablet body 10 is substantially perpendicular to the main surface of the input unit body 20 (see Figure 13). As shown in Figure 13, a user faces the link unit 126 coupled to the rear of the tablet body 10. In this state, the tablet body 10 can be rotated in the direction of arrow "K", pivoting about the first hinge 5, 23, 122, 161, 164, until the tablet body 10 abuts the input unit body 20. In this arrangement, the display part 11 of the tablet body 10 faces upwards away from the input unit body 20, as shown in Figures 1, 8 and 10, thereby facilitating tablet operation of the portable computer.

Steps performed in changing the arrangement of the portable computer from the tablet operating position (refer to Figure 1) to the detached position (refer to Figure 2) will now be described.

In the tablet operating position (see Figure 1), the rotation plate projections 131 of the rotation plate 130 are locked to the projections 13 of the tablet body 10, so that the tablet body 10 is locked to the link 126. (refer to Figure 3). At the same time, the catches 103 of the first and second bolts 100 coupled to the locking element 90 located in the input unit body 20 are received in the first and second bolt receiving holes 174 formed in the holders 170 of the supporting unit, so that the link 126 is locked to the input unit body 20 (refer to Figure 8).

Further, as shown in Figure 8, the rotation plate projection guide 134 of the rotation plate 130 is received in the rotation guide elongated hole 44 of the latch 40 via the projection guide elongated hole 125 of the link 126, and the stopper projection 82 of the stopper 80 is accommodated in the first section 72 of the guide 70.

The lever 60 can be rotated in the direction of arrow "B" of Figure 8, i.e. such that the lever button 61 of the lever 60 is pulled away from the input unit body 20, so as to provide a force to slide the latch 40 in the direction of arrow "C", thereby rotating the rotation plate 130 in the direction of arrow "D".

When the rotation plate 130 is rotated in the direction of arrow "D", i.e. clockwise when viewed from a position facing the keyboard 26, the stopper projection 82 of the stopper 80 moves from the first section 72 to the second section 73 of the guide 70 as shown in Figure 9, and the rotation plate projections 131 of the rotation plate 130 are released from the projections 13 of the tablet body 10. That is, the tablet body 10 can be detached from the input unit body 20.

Then, as shown in Figure 2, the tablet body 10 is released and separated from the input unit body 20 in the direction of arrow "A", i.e. a direction perpendicular to the main surface of the input unit body 20, so that the tablet body 10 is detached from the input unit body. At this time, the link 126 is accommodated in the link accommodating portion 24 of the input unit body 20.

Thus, a user can use the tablet portion of the portable computer while carrying the tablet body 10 detachedly from the input unit body 20.

In the event that the rotation plate 130 is rotated in the direction of arrow "D" by a user pulling the lever 60 while the stopper projection 82 is accommodated in the second section 73 of the guide 70, the stopper projection 82 is returned, as a result of the elastic force of the first spring 43 on the latch 40, from the second section 73 of the guide 70 to the first section 72, via the third section 74. This has the effect of returning the lever 60 and the rotation plate 130 to their initial positions shown in Figure 2.

Thus, the portable computer according to the present invention can alternate between a tablet operating position of Figure 1, the detached position of Figure 2, still capable of tablet operation, and the general operating position of Figure 12, such that it is flexible as regards its positions of use and is convenient for a user to operate. Furthermore, the link 126 is not externally visible in the tablet operating position of Figure 1, so that the portable computer has a slim, compact and aesthetically pleasing outer appearance.

Although certain embodiments of the present invention have been illustrated and described, it will be appreciated by those skilled in the art that changes may be made to these embodiments without departing from the scope of the invention as defined by the appended claims.

## Claims

1. A portable computer comprising:
a tablet body (10) to accommodate a plurality of hardware components and that is capable of tablet operation;
an input unit body (20) to input data into the tablet body;
a link (126) having a first end rotatably coupled to a rear of the tablet body and a second end rotatably coupled to a back of the input unit body,
wherein the tablet body alternates between a tablet operation position in which the tablet body is folded on the input unit body while the link is interposed between the rear of the tablet body and an upper surface of the input unit body, and an exposed position in which the tablet body coupled with the link is spaced from the input unit body and the upper surface of the input unit body is externally exposed; and
a coupling unit provided in a coupling portion between the link and the tablet body and detachably coupling the tablet body to the input unit body,
wherein the coupling unit comprises a first projection (13) provided in one of the tablet body and the link, and a rotation plate (130) rotatably provided in the other one of the tablet body and the link and formed with a rotation plate projection (131) arranged to be locked to or released from the first projection (13) by rotating the rotation plate (130).

2. The portable computer according to claim 1, further comprising a latch (40) provided to slide in the input unit body, interlocking with the rotation plate, and rotating the rotation plate to cause the rotation plate projection to be locked to and released from the first projection.

3. The portable computer according to claim 2, wherein,
the rotation plate is formed with a rotation guide projection (134),
the link is formed with a projection guide elongated hole (125) in which the rotation guide projection is inserted, and
the latch is formed with a rotation guide elongated hole (44) in which the rotation guide projection is received in the rotation guide elongated hole via the projection guide elongated hole, in the tablet operation position.

4. The portable computer according to claim 3, further comprising a lever (60) rotatably provided in the input unit body, connected to the latch, and allowing the latch to slide in the input unit body.

5. The portable computer according to claim 4, wherein
the latch is formed with a lever projection (45), and the lever comprises a grip (61) exposed to the outside of the input unit body, and a lever guide (62) extending from the grip and stopped by the lever projection in the input unit body.

6. The portable computer according to claim 5, further comprising:
a guide provided in the input unit body and guiding the latch to slide; and
a stopper assembly (80, 84) connecting the guide with the latch.

7. The portable computer according to claim 6, further comprising a first spring (43) including a first end coupled to the input unit body and a second end coupled to the latch, and exerting an elastic force to the latch.

## Patentansprüche

1. Tragbarer Rechner, der Folgendes umfasst:
ein Tablet-Gehäuse (10) zum Unterbringen mehrerer Hardwarekomponenten, das zum Tablet-Betrieb fähig ist;
ein Eingabegerätegehäuse (20) zum Eingeben von Daten in das Tablet-Gehäuse;
ein Verbindungsglied (126) mit einem ersten Ende, das drehbar mit einem hinteren Teil des Tablet-Gehäuses verbunden ist, und einem zweiten Ende, das drehbar mit einer Rückseite des Eingabegerätegehäuses verbunden ist,
wobei das Tablet-Gehäuse zwischen einer Tablet-Betriebsposition, in der das Tablet-Gehäuse auf das Eingabegerätegehäuse geklappt ist, während das Verbindungsglied zwischen dem hinteren Teil des Tablet-Gehäuses und einer oberen Fläche des Eingabegerätegehäuses eingeschoben ist, und einer freiliegenden Position wechselt, in der das Tablet-Gehäuse, das mit dem Verbindungsglied verbunden ist, sich in einem Abstand von dem Eingabegerätegehäuse befindet und die obere Fläche des Eingabegerätegehäuses nach außen freiliegt; und
eine Verbindungseinheit, die in einem Verbindungsabschnitt zwischen dem Verbindungsglied und dem Tablet-Gehäuse vorgesehen ist und das Tablet-Gehäuse abnehmbar mit dem Eingabegerätegehäuse verbindet,
wobei die Verbindungseinheit einen ersten Vorsprung (13), der in einem des Tablet-Gehäuses und des Verbindungsglieds vorgesehen ist, und eine Drehplatte (130) umfasst, die drehbar in dem jeweils anderen des Tablet-Gehäuses und des Verbindungsglieds vorgesehen und mit einem Drehplattenvorsprung (131) ausgebildet ist, der darauf eingerichtet ist, durch Drehen der Drehplatte (130) mit dem ersten Vorsprung (13) arretiert oder aus diesem gelöst zu werden.

2. Tragbarer Rechner nach Anspruch 1, der weiterhin einen Riegel (40) umfasst, der zum Gleiten in das Eingabegerätegehäuse vorgesehen ist, sich mit der Drehplatte verriegelt und die Drehplatte dreht, um zu bewirken, dass der Drehplattenvorsprung mit dem ersten Vorsprung arretiert und aus diesem gelöst wird.

3. Tragbarer Rechner nach Anspruch 2, wobei:
die Drehplatte mit einem Drehführungsvorsprung (134) ausgebildet ist,
das Verbindungsglied mit einer länglichen Vorsprungsführungsöffnung (125) ausgebildet ist, in die der Drehführungsvorsprung eingesetzt wird, und
der Riegel mit einer länglichen Drehführungsöffnung (44) ausgebildet ist, wobei der Drehführungsvorsprung in der Tablet-Betriebsposition mittels der länglichen Vorsprungsführungsöffnung in der länglichen Drehführungsöffnung aufgenommen wird.

4. Tragbarer Rechner nach Anspruch 3, der weiterhin einen Hebel (60) umfasst, der drehbar in dem Eingabegerätegehäuse vorgesehen ist, mit dem Riegel verbunden ist und ermöglicht, dass der Riegel in das Eingabegerätegehäuse gleitet.

5. Tragbarer Rechner nach Anspruch 4, wobei
der Riegel mit einem Hebelvorsprung (45) ausgebildet ist und der Hebel einen Griff (61), der zur Außenseite des Eingabegerätegehäuses freiliegt, und eine Hebelführung (62) umfasst, die sich von dem Griff erstreckt und von dem Hebelvorsprung in dem Eingabegerätegehäuse gestoppt wird.

6. Tragbarer Rechner nach Anspruch 5, der weiterhin Folgendes umfasst:
eine Führung, die in dem Eingabegerätegehäuse vorgesehen ist und den Riegel zum Gleiten führt; und
eine Stopperanordnung (80, 84), die die Führung mit dem Riegel verbindet.

7. Tragbarer Rechner nach Anspruch 6, der weiterhin eine erste Feder (43) umfasst, die ein erstes Ende, das mit dem Eingabegerätegehäuse verbunden ist, und ein zweites Ende, das mit dem Riegel verbunden ist, beinhaltet und eine Federkraft auf den Riegel ausübt.

## Revendications

1. Ordinateur portable comprenant :
un corps de tablette (10) pour y loger une pluralité de composants matériels et qui est capable de fonctionner comme tablette ;
un corps d'unité de saisie (20) pour saisir des données dans le corps de la tablette ;
un élément de liaison (126) ayant une première extrémité accouplée de manière rotative à un arrière du corps de la tablette et une deuxième extrémité accouplée de manière rotative à un dos du corps de l'unité de saisie,
dans lequel le corps de la tablette alterne entre une position de fonctionnement de tablette dans laquelle le corps de la tablette est plié sur le corps de l'unité de saisie tandis que l'élément de liaison est interposé entre l'arrière du corps de la tablette et une surface supérieure du corps de l'unité de saisie, et une position exposée dans laquelle le corps de la tablette accouplé à l'élément de liaison est écarté du corps de l'unité de saisie et la surface supérieure du corps de l'unité de saisie est exposée à l'extérieur ; et
une unité d'accouplement prévue dans une partie d'accouplement entre l'élément de liaison et le corps de la tablette et accouplant de manière détachable le corps de la tablette au corps de l'unité de saisie,
dans lequel l'unité d'accouplement comprend une première saillie (13) prévue dans soit le corps de la tablette, soit l'élément de liaison, et une plaque de rotation (130) prévue de manière rotative dans l'autre élément que le corps de la tablette ou l'élément de liaison et formée avec une saillie de plaque de rotation (131) agencée de façon à être bloquée avec la première saillie (13), ou à être dégagée de celle-ci, en tournant la plaque de rotation (130).

2. Ordinateur portable selon la revendication 1, comprenant en outre un loquet (40) prévu de façon à coulisser dans le corps de l'unité de saisie, s'enclenchant avec la plaque de rotation, et tournant la plaque de rotation pour faire en sorte que la saillie de la plaque de rotation soit bloquée avec la première saillie ou dégagée de celle-ci.

3. Ordinateur portable selon la revendication 2, dans lequel
la plaque de rotation est formée avec une saillie de guidage de rotation (134),
l'élément de liaison est formé avec un trou allongé de guidage de saillie (125) dans lequel la saillie de guidage de rotation est insérée, et
le loquet est formé avec un trou allongé de guidage de rotation (44) dans lequel la saillie de guidage de rotation est reçue dans le trou allongé de guidage de rotation via le trou allongé de guidage de saillie, dans la position de fonctionnement de la tablette.

4. Ordinateur portable selon la revendication 3, comprenant en outre un levier (60) prévu de manière rotative dans le corps d'unité de saisie, relié au loquet, et permettant au loquet de coulisser dans le corps de l'unité de saisie.

5. Ordinateur portable selon la revendication 4, dans lequel
le loquet est formé avec une saillie de levier (45), et le levier comprend une poignée (61) exposée à l'extérieur du corps de l'unité de saisie, et un guide de levier (62) s'étendant depuis la poignée et arrêté par la saillie de levier dans le corps de l'unité de saisie.

6. Ordinateur portable selon la revendication 5, comprenant en outre :
un guide prévu dans le corps de l'unité de saisie et guidant le loquet dans son coulissement ; et
un ensemble d'arrêt (80, 84) reliant le guide au loquet.

7. Ordinateur portable selon la revendication 6, comportant en outre un premier ressort (43) comprenant une première extrémité accouplée au corps de l'unité de saisie et une deuxième extrémité accouplée au loquet, et exerçant une force élastique sur le loquet.
